# EUROPÄISCHE PATENTSCHRIFT

(11) **EP 2 759 376 B1**
(45) Veröffentlichungstag und Bekanntmachung des Hinweises auf die Patenterteilung: **27.11.2019**
(21) Anmeldenummer: 14000246.0
(22) Anmeldetag: 24.01.2014
(51) Int. Cl.: B25B 5/14, B25B 5/08, B23B 31/40, B44B 5/00

(54) **Anordnung mit Spannvorrichtung zum Spannen eines eine Lageröffnung aufweisenden Motorbauteils**
Arrangement with clamping device for clamping a motor component with a bearing opening
Dispositif avec dispositif de serrage d'un composant moteur avec ouverture de palier

(30) Priorität: 25.01.2013 DE 102013001277
(43) Veröffentlichungstag der Anmeldung: 30.07.2014
(73) Patentinhaber: Alfing Kessler Sondermaschinen GmbH, 73433 Aalen (DE)
(72) Erfinder: Straub, Ulrich, D-73079 Süßen (DE); Müllner, Ralf, D-73760 Ostfildern (DE)
(74) Vertreter: Patentanwälte Bregenzer und Reule Partnerschaftsgesellschaft mbB

(56) Entgegenhaltungen:
- EP-A2- 0 925 871
- DE-A1- 2 502 561
- DE-B3-102009 037 233
- DE-C- 629 036
- DE-U1- 9 204 822

## Beschreibung

Die Erfindung betrifft eine Anordnung gemäß dem Oberbegriff des Patentanspruchs 1, umfassend ein eine Lageröffnung aufweisendes Motorbauteil und eine Spannvorrichtung zum Spannen des Motorbauteils. Die Erfindung betrifft ebenso ein Verfahren gemäß dem Oberbegriff des Patentanspruchs 15.

Eine derartige Spannvorrichtung dient beispielsweise zum Halten eines Pleuels für eine weitere Bearbeitung, beispielsweise zum Bohren einer Lageröffnung. Bei der Lageröffnung handelt es sich beispielsweise um das kleine oder große Auge eines Pleuels. Bei der Bearbeitung von Motorbauteilen, insbesondere Pleueln, sind weitere Bearbeitungsschritte nötig, beispielsweise Cracken, Schrauben oder dergleichen. Weiterhin werden häufig mithilfe eines Lasers Strukturen in die Lageröffnung eingebracht, die später beispielsweise zur Führung von Öl dienen oder auch dazu, dass in die Lageröffnung ein weiteres Bauteil, beispielsweise eine Lagerhülse, verdrehsicher und einen guten Halt findend eingebracht werden kann. Der Arbeitsschritt des Laserns ist jedoch aufwändig.

Spannvorrichtungen zum Halten von Werkstücken oder Rohren sind beispielsweise in EP 0 925 871 A1 und DE 25 02 561 A erläutert.

EP 0 925 871 A1 offenbart eine Anordnung gemäß dem Oberbegriff des Patentanspruchs 1.

DE 10 2009 037 233 B3 offenbart ein Verfahren gemäß dem Oberbegriff des Patentanspruchs 15.

Es ist daher die Aufgabe der vorliegenden Erfindung, eine verbesserte Spannvorrichtung im Zusammenhang mit der Bearbeitung von Pleueln bereitzustellen.

Zur Lösung der Aufgabe sind eine Anordnung gemäß Anspruch 1 sowie ein Verfahren gemäß Anspruch 15 vorgesehen.

Bei dem Motorbauteil handelt es sich um ein Pleuel.

Es ist ein Grundgedanke der vorliegenden Erfindung, dass im Zuge des Spannens des Motorbauteils, bei dem die Spannvorrichtung in die Lageröffnung eingreift, gleichzeitig eine Prägestruktur in die Lageröffnung eingebracht wird. Das Motorbauteil steht also für eine weitere Bearbeitung, beispielsweise Bohren, Fräsen oder dergleichen, zur Verfügung, während simultan die mindestens eine Prägestruktur in die Lageröffnung eingeprägt wird.

Die mindestens eine Spannfläche, d.h. beispielsweise der Spannkörper, an dem die Spannfläche mit der Prägekontur angeordnet ist, wird beispielsweise radial durch den Spannantrieb verstellt, so dass er am Innenumfang der Lageröffnung anliegt.

Die Spannvorrichtung bildet oder umfasst vorteilhaft eine Zentriervorrichtung. Die als Zentriervorrichtung ausgestaltete oder eine Zentriervorrichtung bildende Spannvorrichtung kann in ein Handhabungskonzept eingebunden sein, bei dem beispielsweise die Spannvorrichtung der erfindungsgemäßen Anordnung die Funktion einer Zentriervorrichtung für das Motorbauteil leistet, das Motorbauteil also beispielsweise zentriert, so dass es von einer zweiten Spannvorrichtung gespannt werden kann.

Es ist auch möglich, dass das Motorbauteil in einem ersten Schritt von einer Zentriervorrichtung zentriert wird, wobei der Prägevorgang stattfinden kann oder auch nicht, d.h. dass die Zentriervorrichtung Prägemittel im Sinne der Erfindung aufweist oder auch nicht.

Anschließend in einem zweiten Schritt wird das Motorbauteil von einer Haltevorrichtung oder Spannvorrichtung ohne Prägefunktion gehalten oder gespannt. In dieser Lage kann ein weiterer Bearbeitungsschritt an dem Motorbauteil stattfinden, beispielsweise eine Bohrung angebracht werden, die Lageröffnung geschliffen oder gehont werden oder dergleichen.

Vorzugsweise wird das Motorbauteil dann in einem dritten Schritt noch mit einer eine Zentriervorrichtung bildenden Spannvorrichtung der erfindungsgemäßen Anordnung zentriert und dabei mit der Prägestruktur versehen.

Die Spannvorrichtung umfasst vorteilhaft einen Zentrierdorn, mit dem das Motorbauteil in einer zentrierten, zur weiteren Bearbeitung geeignete Lage gehalten wird.

Beispielsweise aufgrund der vorgenannten Zentrierung ist es möglich, dass die Spannvorrichtung an ganz bestimmten Stellen, insbesondere an einem oder mehreren Winkelsegmenten, anhand der mindestens einen Prägekontur gezielt Prägungen in das zu bearbeitende Motorbauteil einbringt. Die Erfindung sieht vor, dass die Spannvorrichtung Positioniermittel zur winkelrichtigen Positionierung des Motorbauteils und des mindestens einen Spannkörpers relativ zueinander aufweist. Beispielsweise sind an dem mindestens einen Spannkörper Führungskonturen vorgesehen, die das Motorbauteil beim Anordnen an der Spannvorrichtung so führen, dass dessen Winkelposition und/oder Längsabstand relativ zu der mindestens einen Prägekontur (bevorzugt sind weitere vorhanden) definiert ist und möglichst exakt stimmt. Es ist auch möglich, dass beispielsweise eine Fördereinrichtung oder eine Handlingeinrichtung, zum Beispiel ein Handhabungsroboter, ein Werkstückmagazin, oder eine sonstige das Motorbauteil der Spannvorrichtung zuführende Einrichtung auf die Position des Motorbauteils relativ zu der mindestens einen Prägekontur sozusagen achtet und das Motorbauteil relativ zu der mindestens einen Prägekontur in einer vorbestimmten Lage an der Spannvorrichtung positioniert.

Es ist möglich, dass die Spannvorrichtung beispielsweise zwei zueinander beabstandete Spannmittel, zum Beispiel Spanndorne, aufweist, von denen der eine Spanndorn oder dass eine Spannmittel sozusagen ein Führungsmittel für das Motorbauteil zur Anordnung des Motorbauteils am andern Spannmittel oder Spanndorn bildet, so dass die drehwinkelrichtige Positionierung des Motorbauteils zur Einbringung der Prägung gewährleistet ist.

Weiterhin ist es zwar möglich, dass die Spannvorrichtung beispielsweise an ihrem gesamten Innenumfang oder Außenumfang Prägekonturen aufweist. Jedoch ist es vorteilhaft, wenn die mindestens eine Prägekontur eine vorbestimmte Winkelpositionen hat, also beispielsweise an einem vorbestimmten Winkelsegment der Spannvorrichtung vorgesehen ist. Diese Maßnahme ist insbesondere im Zusammenhang mit der vorherigen Maßnahme, den Positioniermitteln, besonders zweckmäßig.

Es ist möglich, dass unterschiedliche Winkelsegmenten unterschiedliche Prägekonturen zugeordnet sind. Es ist zum Beispiel möglich, das an einem Winkelsegment keine Prägung oder eine andere Prägung vorgenommen wird als an einem anderen Winkelsegment.

Bei der Lageröffnung handelt es sich um das Lagerauge eines Pleuels.

Der mindestens eine Spannkörper weist zweckmäßigerweise an der Spannfläche mindestens einen Dehnungsschlitz auf. Somit kann sich die Spannfläche sozusagen aufweiten, um gegen die Lageröffnung gespannt zu werden.

Der Spannkörper kann auch mindestens zwei durch mindestens einen Dehnungsschlitz voneinander getrennte Wandabschnitte aufweist. An einem oder mehreren Wandabschnitte befindet sich dann die mindestens eine Prägekontur. So ist es beispielsweise möglich, dass ein Wandabschnitt keine Prägekontur aufweist, während ein anderer oder mehrere andere Wandabschnitte mit der Prägekontur oder den Prägekonturen versehen sind. Somit ist es beispielsweise möglich, dediziert einzelne Abschnitte der Lageröffnung mit der Prägekontur zu versehen.

Beispielsweise ist der Spannkörper als eine Hülse ausgestaltet. Die durch den Dehnungsschlitz oder die Dehnungsschlitze voneinander getrennte Wandabschnitte sind beispielsweise an einem oder mehreren Bereichen miteinander verbunden, können sich jedoch durch den Spannantrieb beaufschlagt voneinander weg entfernen, sind also sozusagen aufspreizbar.

Eine zweckmäßige Ausführungsform der Erfindung sieht vor, dass an einem Spannkörperträger der Spannvorrichtung mindestens zwei durch den Spannantrieb antreibbare Spannkörper beweglich gelagert sind, von denen mindestens einer eine Spannfläche mit mindestens einer vor die Spannfläche vorstehenden Prägekontur aufweist. Beispielsweise handelt es sich bei einem solchen Spannkörper um einen Spannbacken. Auch hier gilt, dass mehrere Spannkörper oder Spannbacken mit Prägekonturen versehen sein können oder auch nur ein einziger. Die Prägekontur befindet sich beispielsweise an der der Lageröffnung zugewandten freien Seite des jeweiligen Spannkörpers oder Spannbackens, der beweglich am Spannkörperträger gelagert ist.

Die Spannfläche kann eine geschlossene Spannfläche, insbesondere mit einem im Querschnitt kreisrunden Umfang, sein. Es ist aber auch möglich, dass eine Umfangswand mit der Spannfläche in Segmente oder Wandabschnitte gegliedert ist, die individuell oder als Ganzes im Sinne des Vergrößerns des Außenumfangs eines Spanndorns der Spannvorrichtung beaufschlagbar sind. Es ist ferner möglich, dass die Spannfläche einen oder mehrere Dehnungsschlitze oder Dehnungsnuten aufweist, so dass die Wandabschnitte oder Teile davon nachgiebig sind. Es können auch Wandabschnitte durch Dehnungsschlitze voneinander getrennt sein.

Die Spannvorrichtung kann beispielsweise zum zangenartigen Halten oder Spannen des Motorbauteils ausgestaltet sein.

Beispielsweise hat die Spannvorrichtung eine Zange mit zwei relativ zueinander beweglichen und durch den Spannantrieb betätigbaren Zangenelementen. Eines der Zangenelemente weist den zum Eingriff in die Lageröffnung vorgesehenen mindestens einen Spannkörper mit der der Lageröffnung zugeordneten Spannfläche auf. An der Spannfläche befindet sich die mindestens eine Prägekontur. Das Zangenelement kann den Spannkörper bilden. Das andere Zangenelement ist zweckmäßigerweise zur Anlage an einer die Lageröffnung begrenzenden Wand vorgesehen. Somit kann die Spannvorrichtung das Motorbauteil in der Art einer Zange greifen oder spannen und dabei gleichzeitig an der Lageröffnung die Prägestruktur anbringen. Selbstverständlich können mehrere Zangenelemente in dieser Form an dem Motorbauteil angreifen bzw. dieses spannen.

Eine besonders bevorzugte und in der Zeichnung dargestellte Ausführungsform der Erfindung sieht vor, dass die Spannvorrichtung einen Spanndorn aufweist und die Spannfläche an einer Außenumfangsfläche des Spanndorns vorgesehen ist, die durch den Spannantrieb im Sinne eines Vergrößerns des Außenumfangs des Spanndorns betätigbar ist. Beispielsweise hat der Spanndorn einen oder mehrere beweglich gelagerte Spannkörper, die durch den Spannantrieb nach radial außen betätigbar sind. Der Spanndorn kann beispielsweise einen Zentrierdorns bilden.

Der mindestens eine Spannkörper des Spanndorns weist zweckmäßigerweise ein mindestens zwei voneinander weg spreizbare Spannsegmente auf, die durch den Spannantrieb in die Spannstellung verstellbar sind. Beispielsweise bilden diese Spannsegmente Bestandteile einer Spannhülse, die durch einen innenliegenden Schieber, durch Druckbeaufschlagung durch Fluid oder dergleichen andere von radial innen wirkende Kraft voneinander weg verstellbar sind.

Eine bevorzugte Ausführungsform der Erfindung sieht vor, dass die mindestens eine Prägekontur an einem lösbar an dem mindestens einen Spannkörper anordenbaren Prägekörper angeordnet ist. Somit kann die Prägekontur bei Verschleiß ohne weiteres ausgetauscht werden. Der Spannantrieb selbst kann also unverändert bleiben, während nur das verschleißende Bauteil, nämlich der Prägekörper, ausgetauscht wird. Es ist auch möglich, eine Spannvorrichtung umzurüsten, beispielsweise indem ein Prägekörper mit einer ersten Prägekontur gegen einen Prägekörper mit einer anderen, zweiten Prägekontur ausgetauscht wird, um andersartige Prägestrukturen zu prägen.

Als Befestigungsmittel für den auswechselbaren Prägekörper zur Befestigung am Spannkörper eignen sich beispielsweise Schrauben und/oder Rastmittel und/oder Steckverbindungsmittel oder dergleichen. Beispielsweise ist an dem Prägekörper mindestens ein Steckvorsprung vorgesehen, der in eine Steckaufnahme am Spannkörper eindringen kann und dort zweckmäßigerweise noch verrastet.

Der Prägekörper umfasst zweckmäßigerweise ein Stempelelement oder eine Platte, das oder die an dem mindestens einen, beispielsweise einen Spannbacken bildenden, Spannkörper lösbar befestigbar ist.

Der Prägekörper kann auch eine Hülse umfasst oder als Hülse ausgestaltet sein, deren Außenumfang mindestens eine Spannfläche umfasst. Bevorzugt hat die Hülse eine konische Einführstruktur oder freie Seite derart, dass sie leicht in die Lageröffnung des Motorbauteils einbringbar ist.

Eine besonders bevorzugte Ausführungsform sieht vor, dass der mindestens eine Spannkörper ebenfalls als Hülse ausgestaltet ist, wobei der Spannkörper sozusagen die innere Hülse darstellt und der Prägekörper die äußere, in Kontakt mit der Lageröffnung kommende Hülse ist.

Die Hülse des Prägekörpers und/oder die Hülse des Spannkörpers haben zweckmäßigerweise mindestens zwei voneinander weg spreizbare, jedoch miteinander verbundene Hülsensegmente, die durch den Spannantrieb in die Spannstellung verstellbar sind. Besonders bevorzugt ist es, wenn jedem Hülsensegmente des Prägekörpers ein Hülsensegment des Spannkörpers zugeordnet ist. Somit kann also das radial innere Hülsensegment auf das radial äußere Hülsensegment wirken. An den Hülsensegmenten der äußeren Hülse, also dem Prägekörper, ist die mindestens eine Prägekontur vorgesehen. Es versteht sich, dass eine oder mehrere der Hülsensegmente mit der Prägekontur oder den Prägekonturen versehen sein können.

Der mindestens eine Spannkörper und/oder der lösbar an dem mindestens einen Spannkörper anordenbare Prägekörper, sozusagen das Austauschteil, weist zweckmäßigerweise mindestens einen radial aufweitbaren Wandabschnitt auf. Beispielsweise kann eine Hülse mit einem radial aufweitbaren Wandabschnitt ausgestattet sein. Wenn der Wandabschnitt durch den Spannantrieb von radial innen beaufschlagt wird, weitet sich der Spannkörper oder der Prägekörper radial auf, so dass die Spannstellung erzielt wird und die Prägekontur die Prägestruktur in der Lageröffnung einprägt.

Die mindestens eine Prägekontur umfasst zweckmäßigerweise mindestens einen bezüglich der Spannfläche ortsfesten Prägevorsprung. Selbstverständlich kann der Prägevorsprung langgestreckt sein, so dass beispielsweise eine Art Nut in die Lageröffnung eingeprägt wird. Es ist aber auch möglich, dass die Prägekontur ein beweglich an der Spannfläche gelagertes Prägeelement, zum Beispiel eine Walze oder eine Kugel, umfasst. Das Prägeelement kann drehbar an der Spannfläche gelagert sein. Wenn also die Spannvorrichtung während des Spannens noch bewegt, beispielsweise gedreht oder axial verstellt, wird, rollt das Prägeelement beispielsweise an der Lageröffnung entlang und führt dort eine entsprechende Prägung durch.

An dieser Stelle sei bemerkt, dass die Prägestruktur selbstverständlich unterschiedliche Gestalt haben kann, beispielsweise einen Kanal, eine Kugelkalotte oder dergleichen andere Formen umfasst.

Der Spannantrieb kann verschiedenartig ausgestaltet sein, beispielsweise auf einem fluidischen Prinzip beruhen. Bei dieser Variante ist es noch nicht einmal notwendig, dass eine die Prägekontur aufweisende Wand, z.B. eine Umfangswand, Schlitze aufweist oder sonstige nachgiebige Trennstellen. Vielmehr kann die Wand oder Umfangswand als Ganzes etwas aufgeweitet werden. Beispielsweise umfasst der Spannantrieb eine oder mehrere Fluidkammern, die der Wand mit der Prägekontur angeordnet sind. Bei einer Druckbeaufschlagung mit einem Fluid, beispielsweise Hydrauliköl, gibt die Wand oder Umfangswand nach, d.h. sie wird von der Fluidkammer aus betätigt und drückt z.B. radial nach außen auf den Innenumfang der Lageröffnung, so dass die Prägekontur in die Lageröffnung hinein gepresst wird.

Der Spannantrieb kann aber auch auf einem mechanischen Prinzip beruhen und beispielsweise ein Keilgetriebe zur Beaufschlagung der die Prägekontur aufweisenden Spannfläche umfassen. Das Keilgetriebe umfasst beispielsweise einen oder mehrere Keilkörper, die an der von Spannfläche abgewandten Rückseite des die Prägekontur aufweisenden Wandabschnitts angeordnet sind. Wenn der Keilkörper längs betätigt wird, z.B. geschoben oder gezogen, drückt er aufgrund einer Schrägflächenanordnung auf die Rückseite der Wand oder Umfangswand, so dass diese nach außen im Sinne eines Pressens der Prägekontur in die Lageröffnung betätigt wird. Die Schrägflächenanordnung kann eine Schrägfläche am Keilkörper und/oder an der Wand oder Umfangswand umfassen.

Das Keilgetriebe kann auch mindestens eine Kugel als Keilkörper oder Betätigungskörper umfassen.

Das Keilgetriebe kann auch einen Schraubkörper umfassen, dessen Betätigung bzw. Bewegung der mindestens eine Wandabschnitt mit der Prägekontur betätigbar ist. Beispielsweise kann der Schraubkörper einen konischen Grundkörper haben, an dessen Außenumfang die Schraubenwindungen angeordnet sind.

An ein Betätigungskörper des Spannantriebs, beispielsweise einem Schieber, kann eine Schmiervorrichtung, beispielsweise eine Schmiernut, vorgesehen sein, so dass ein Schmiermittel zwischen einerseits den Betätigungskörper und andererseits den mindestens einen dadurch betätigten oder betätigbaren Spannkörper gelangen kann.

Ein Betätigungskörper, beispielsweise ein Schieber, zur Betätigung des mindestens einen Spannkörpers weist zweckmäßigerweise einen Linearanschlag auf. Der Längsanschlag ist zweckmäßigerweise zugleich eine Verdrehsicherung für den Betätigungskörper oder Schieber.

Eine zweckmäßige Ausführungsform der Erfindung sieht vor, dass die Spannvorrichtung eine Kühleinrichtung oder eine Schmiereinrichtung aufweist. Vorzugsweise mündet einen Schmiermittelkanal im Bereich der mindestens einen Spannfläche und/oder im Bereich der mindestens einen Prägekontur aus.

Eine vorteilhafte Ausführungsform der Erfindung sieht vor, dass die Lageröffnung an einer in eine Lageraufnahme eines Motorbauteil-Grundkörpers des Motorbauteils einzubringende Lagerhülse vorgesehen ist und der mindestens eine Spannkörper einen Bestandteil eines Einpressdorns für die Lagerhülse ist. Mindestens ein einen Teil der Spannfläche aufweisender Wandabschnitt des Einpresspressdorns wird durch den Spannantrieb im Sinne eines Aufweitens eines Außenumfangs der Spannfläche und somit eines Außenumfangs der Lagerhülse beaufschlagbar ist damit beaufschlagbar, um die in die Lageraufnahme des Motorbauteils-Grundkörpers eingebrachte Lagerhülse aufzuweiten und an eine Innenfläche dieser Lageraufnahme anzupressen. Somit wird also gleichzeitig beides erreicht, nämlich die Lagerhülse in der Lageraufnahme eingepresst und zugleich anhand der Prägekontur in den Innenraum bzw. die Lageraufnahme der Lagerhülse die Prägestruktur eingebracht.

Es ist dabei ein vorteilhafter Aspekt, dass die Lagerhülse nicht oder mit allenfalls geringer axialer Kraftbeanspruchung in die Lageraufnahme des Grundkörpers des Motorbauteils hinein gebracht und erst dort nach radial außen gepresst wird, so dass sie formschlüssig und/oder kraftschlüssig am Innenumfang der Lageraufnahme anliegt.

Die Lagerhülse kann mit geringer Kraft, vorzugsweise sogar ohne Berührung mit der Lageraufnahme des Motorbauteil-Grundkörpers, in die Lageraufnahme eingebracht werden und wird dann erst aufgeweitet. Dadurch wirken keine Axialkräfte auf die Lagerhülse. Die Lagerhülse kann nicht ausgeschoben werden und/oder exakt bleibend positioniert werden.

Die Lagerhülse wird also vor Ort, nämlich in der Lageraufnahme des Motorbauteil-Grundkörpers, aufgeweitet, so dass sie sich optimal den örtlichen Gegebenheiten anpasst. Dies hat auch den Vorteil, dass eventuelle Unebenheiten am Innenumfang der Lageraufnahme bzw. am Außenumfang der Lagerhülse den Halt der Lagerhülse in der Lageraufnahme sogar noch verbessern, jedenfalls nicht stören. Im Gegensatz zu einem axialen Einpressen, wie es bislang üblich war, stören solche gegebenenfalls vorhandenen Erhöhungen oder Vertiefungen nicht.

Es ist möglich, an unterschiedlichen Stellen unterschiedliche Druckkräfte auf die Umfangswand auszuüben, so dass beispielsweise über unterschiedliche Winkelsegmente gesteuert oder definiert unterschiedliche Druckkräfte zum Einpressen der Lagerhülse an die Lageraufnahme des Motorbauteil-Grundkörpers wirken.

Es versteht sich, dass diese definierte, beispielsweise über unterschiedliche Winkelsegmente unterschiedlich ausgestaltete Krafteinleitung auch dann vorteilhaft ist, wenn die Spannvorrichtung keine Lagerhülse in eine Lageraufnahme einpresst, sondern nur das Motorbauteil spannt und dabei die Prägestrukturen in die Lageröffnung einprägt. Mithin müssen also z.B. bei der Ausgestaltung der Spannvorrichtung, die einen Spanndorn aufweist, die nach radial außen wirkenden Kräfte nicht über den gesamten Außenumfang des Spanndorns gleich sein.

Die Spannvorrichtung weist zweckmäßigerweise mindestens eine Stützanschlagfläche für eine Stirnseite des Motorbauteils, insbesondere der Lagerhülse, auf. Bevorzugt ist eine kontinuierliche, durchgehende Stützanschlagfläche, an der die Stirnseiten möglichst flächig anliegen kann. Dadurch ist das Motorbauteil oder die Lagerhülse gut abgestützt, wenn es oder sie geprägt wird, insbesondere die Lagerhülse aufgeweitet wird.

Die mindestens eine Stützanschlagfläche ist zweckmäßigerweise an einer Anschlagschulter oder einem Anschlagvorsprung des Spanndorns oder Einpressdorns und/oder eines Stützkörpers für den Spanndorn oder Einpressdorn vorgesehen.

Die mindestens eine Stützanschlagfläche oder auch eine Reihe nebeneinander angeordneter Stützanschlagflächen (mindestens zwei Stützanschlagflächen) haben zweckmäßigerweise einen schrägen und nicht rechtwinkligen und/oder einen gekrümmten Verlauf bezüglich einer Achslinie, bei der es sich beispielsweise um die Einführachse des Spanndorns in die Lageröffnung des Motorbauteils oder auch um eine Längserstreckungsachse des Spanndorns oder Einpressdorns handeln kann. Somit kann z.B. eine Lagerhülse, die keine geradlinige oder flache Stirnseite hat, z.B. für ein Korbhenkel-Pleuel, gut abgestützt werden.

Die mindestens eine Stützanschlagfläche ist zweckmäßigerweise an einer Anschlagschulter oder an einem Anschlagvorsprung einer Komponente der Spannvorrichtung, beispielsweise des Spanndorns oder des Stützkörpers oder beiden der vorgenannten, angeordnet. Somit ist es beispielsweise möglich, die Lagerhülse von beiden Seiten her zu stützen.

Eine vorteilhafte Ausführungsform der Erfindung sieht vor, dass die Spannvorrichtung eine Werkstückhalterung zum Halten des Motorbauteils aufweist. Beispielsweise kann die Werkstückhalterung dazu dienen, das Motorbauteil während des Spannens und damit Einprägens der Prägestruktur zu halten. Bei der Werkstückhalterung kann es sich beispielsweise um eine Tragplatte, eine Palette oder dergleichen handeln.

Weiterhin ist es vorteilhaft, wenn die Spannvorrichtung einen Stützkörper zum Abstützen des mindestens einen Spannkörpers oder eines den mindestens einen Spannkörper lagernden Spannkörperträgers während des Einpressens der mindestens einen Prägekontur aufweist. Beispielsweise kann der Stützkörper eine Aufnahme oder Stützfläche für einen vorderen Abschnitt des Spanndorns oder Einpressdorns aufweisen.

Es ist z.B. möglich, dass dem Spanndorn ein Stützkörper gegenüberliegt, der zum Abstützen während des Einpressens der Prägekontur und/oder der Lagerhülse dient. Der Stützkörper kann in der Art eines Dorns oder einer Stange ausgestaltet sein. Es ist aber auch möglich, dass der Stützkörper beispielsweise als eine Art Klotz ausgestaltet ist.

Der Stützkörper und der mindestens eine Spannkörper oder Spannkörperträger für den Spannkörper, beispielsweise ein Spanndorn oder Einpressdorn, sind zweckmäßigerweise relativ zueinander beweglich gelagert. Der Stützkörper einerseits und/oder der mindestens eine Spannkörper oder dessen Spannkörperträger, beispielsweise die gesamte Anordnung in Gestalt eines Spanndorns oder Einpressdorns, sind zweckmäßigerweise relativ zu der Lageröffnung bzw. zu dem Motorbauteil beweglich gelagert. Somit können beide Komponenten in die Lageröffnung hinein bzw. aus dieser heraus bewegt werden. Es ist selbstverständlich auch möglich, dass das Motorbauteil, d.h. das Werkstück, zum dem Spanndorn oder der Spannzange hin bewegt wird. Weiterhin ist es möglich, dass sowohl das Motorbauteil als auch der Stützkörper und/oder der Spanndorn oder die Spannzange beweglich gelagert sind, so dass sie zueinander hin oder voneinander weg verstellbar sind.

Dem Stützkörper und/oder dem mindestens eine Stützkörper oder dessen Spannkörperträger ist mindestens ein Stellantrieb zum relativen Verstellen zueinander und/oder zum Verstellen relativ zum Motorbauteil zugeordnet.

Der Stützkörper hat zweckmäßigerweise eine Aufnahme für einen Vorderabschnitt des Einpressdorns. Somit kann beispielsweise eine Stirnseite des Spanndorns in die Aufnahme eingreifen, während die Lagerhülse aufgeweitet wird.

Die Werkstückhalterung hat zweckmäßigerweise eine Durchtrittsöffnung, durch die der mindestens eine Spannkörper oder ein Spannkörperträger dafür, beispielsweise ein Spanndorn oder Einpressdorn, zum Einprägen der Prägestruktur hindurchtreten können.

Die Spannvorrichtung der erfindungsgemäßen Anordnung kann einen Bestandteil einer allein zu betreibenden Einpress-Maschine bilden oder eine solche Maschine darstellen.

Die Spannvorrichtung der erfindungsgemäßen Anordnung bildet einen Bestandteil einer Werkzeugmaschine oder eines Bearbeitungszentrums für Pleuel, das auch andere Bearbeitungsschritte leisten kann, beispielsweise Fräsen, Drehen, Bohren oder Kerben. Besonders bevorzugt ist es, wenn das Bearbeitungszentrum als Bearbeitungseinrichtung für mindestens einen weiteren Bearbeitungsschritt eine Kerbeinrichtung zum Einbringen von Laserkerben und/oder eine Crackeinrichtung zum Cracken eines Teils des Motorbauteils oder dergleichen aufweist. Somit kann beispielsweise das Pleuel insgesamt von dem Bearbeitungszentrum insgesamt bearbeitet werden, indem beispielsweise zunächst die Lageröffnungen gebohrt und anschließend Teile des Motorbauteils durch Laserkerben und Cracken entfernt werden. Selbstverständlich ist es vorteilhaft, wenn dann auch eine Schraubstation vorhanden ist, um die abgesprengten Teile des Motorbauteils wieder anzufügen.

Nachfolgend werden Ausführungsbeispiele der Erfindung anhand der Zeichnung erläutert. Es zeigen:

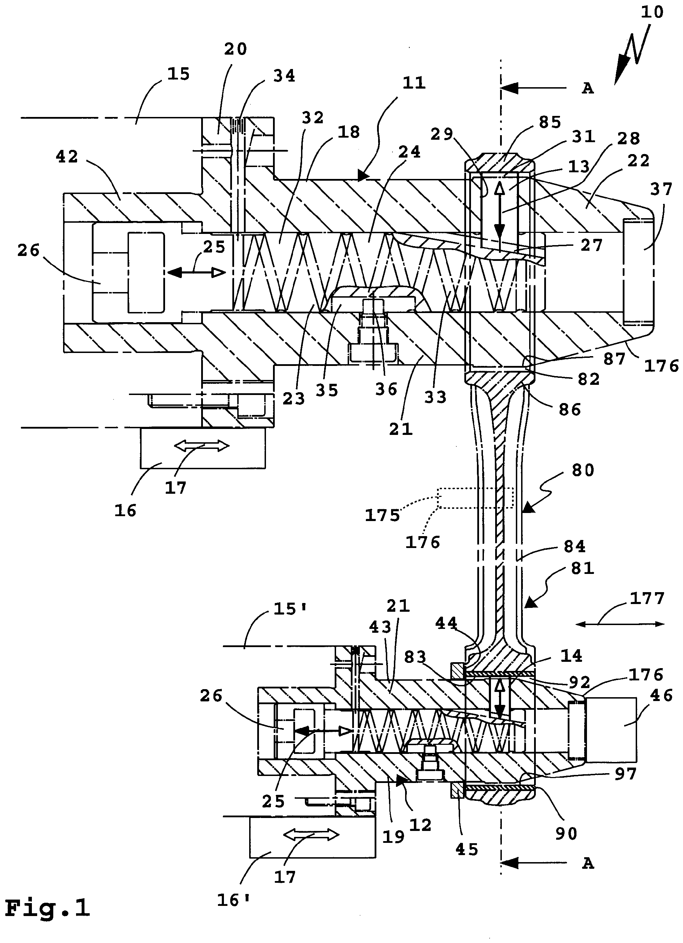

- Figur 1: eine Querschnittsansicht eines ersten Ausführungsbeispiels einer Anordnung gemäß der Erfindung mit Spanndornen, die in Lageröffnungen eines Motorbauteils eingeführt sind,
- Figur 2: eine Querschnittsansicht des in der Figur 1 oberen Spanndorns, etwa in einer Schnittlinie A-A,
- Figur 3: eine Querschnittsansicht des in der Figur 1 unteren Spanndorns, ebenfalls entlang der Schnittlinie A-A,
- Figur 4: eine perspektivische Schrägansicht von oben auf einen Spannkörper des oberen Spanndorns gemäß Figur 1,
- Figur 5: eine Querschnittsansicht eines zweiten Ausführungsbeispiels einer Anordnung gemäß der Erfindung mit einem Spanndorn, der mit einem Hülsen-Prägekörper ausgestattet ist,

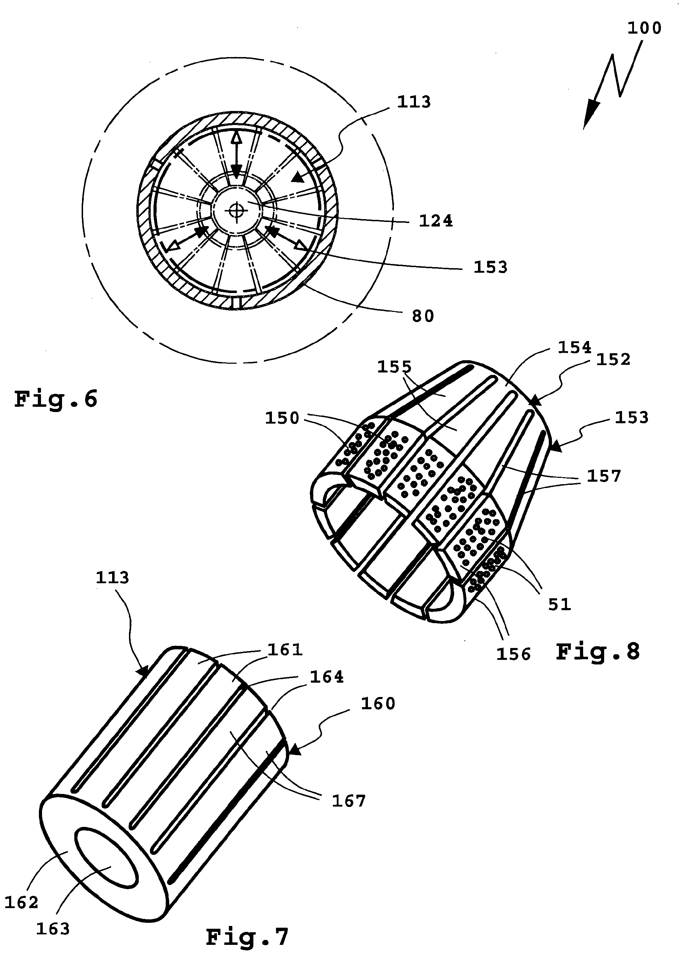

- Figur 6: eine Querschnittsansicht des Spanndorns gemäß Figur 5 entlang einer Schnittlinie B-B in Figur 5,
- Figur 7: einen mit Schlitzen versehenen Spannkörper des Spanndorns und
- Figur 8: den Hülsen-Prägekörper des Spanndorns der Spannvorrichtung gemäß Figur 5 in perspektivischer Darstellung.

Die in der Zeichnung dargestellten Spannvorrichtungen 10 und 110 weisen teilweise gleiche oder ähnliche Komponenten auf, die mit denselben Bezugsziffern versehen sind. Teilweise sind zur Verdeutlichung von Unterschieden bei den Spannvorrichtungen 10 und 110 um 100 verschiedene Bezugsziffern gewählt.

Die Spannvorrichtungen 10 und 110 dienen zur Bearbeitung von Motorbauteilen 80 in Gestalt von Pleueln 81. Die Motorbauteile 80 weisen eine Lageröffnung 82, beispielsweise ein so genanntes großes Auge, sowie einen Lageraufnahme 83 auf, beispielsweise ein kleines Auge. Die Lageröffnung 82 dient zum unmittelbaren Lagern einer weiteren Motorkomponente, während in die in der Zeichnung unten dargestellte Lageraufnahme 83 eine Lagerhülse 90 eingesetzt wird, deren Innenumfang 91 eine Lageröffnung 92 zum Lagern einer weiteren Motorkomponente bildet.

Zwischen der Lageröffnung 82 und der Lageraufnahme 83 erstreckt sich ein Schaft 84 des Pleuels 81. Die Lageraufnahme 83 und der Schaft 84 bilden Bestandteile eines Motorbauteil-Grundkörpers 88 des Pleuels 81.

Mit den Spannvorrichtungen 10 und 110 kann das Motorbauteil 80 beispielsweise für eine weitere Bearbeitung, zum Beispiel zum Anbringen von Laserkerben, zur Anbringung von Bohrungen für Schrauben, mit denen ein Deckel 85 an einen Fuß 86 des Pleuels 81 angeschraubt werden kann, oder dergleichen gespannt werden. Die Spannvorrichtungen 10 und 110 halten das Motorbauteil 80 während dieser weiteren Bearbeitung und erfüllen zu dem noch eine weitere Funktion, was nachfolgend deutlich wird.

Die Spannvorrichtungen 10 und 110 umfassen Spannkörperträger 11, 12 und 111, an denen Spannkörper 13, 14 und 113 beweglich gelagert sind. Die Spannkörper 13, 14 und 113 sind dazu vorgesehen, die Motorbauteile 80 in den Lageröffnungen 82, 92 spannen. Die Spannkörperträger 11, 12 und 111 sind an Haltern 15, 15' angeordnet. Die Halter 15, 15' sind beispielsweise mittels einem Stellantrieb 16, 16' axial beweglich derart, dass die Spannkörperträger 11, 12 und 111 bezüglich der Motorbauteile 80 positionierbar sind, beispielsweise um die Spannanordnungen umfassend die Spannkörperträger 11, 12 und 111 sowie die Spannkörper 13, 14 und 113 in die Lageröffnung 82 und 92 hinein zu bewegen oder daraus heraus zu bewegen.

Beispielsweise sind die Stellantriebe 16, 16' Linearantriebe (Pfeil 17), wobei selbstverständlich auch andere Antriebskonzepte, beispielsweise mit einem Drehantrieb oder dergleichen, möglich sind.

Die Spannanordnungen umfassend die Spannkörperträger 11, 12 und 111 sowie die Spannkörper 13, 14 und 113 bilden beispielsweise Spanndorne 18, 19 und 118.

Nachfolgend werden die Spanndorn 18 und 19 näher beschrieben. Da die Spanndorne 18 und 19 im Wesentlichen baugleich sind, sind ihre Komponenten mit den selben Bezugsziffern versehen. Beispielsweise sind die beiden Spannkörperträger 11 und 12 abgesehen von ihrer Dimension praktisch baugleich. Auch die Spannkörper 13 und 14 sind sehr ähnlich, auch wenn die Spanndorne 18 und 19 unterschiedliche Funktionen erfüllen.

Der Spannkörperträger 11, 12 oder 111 weist jedenfalls einen Halteabschnitt 20, 120 auf, der zur Verbindung bzw. zum Halt an dem Halter 15, 15' dient.

Von dem Halteabschnitt 20 weg erstreckt sich ein Vorsprung 21, 121. Der Vorsprung 21 ist dornartig.

Der Vorsprung 21 läuft an seinem freien Ende 22 konisch ausläuft. Somit hat der Vorsprung 21 an seinem freien Ende 22 eine Einführschräge.

Der Spannkörperträger 11, 12, 112 weist einen Führungskanal 23 auf, in welchem ein Betätigungskörper 24, 124 zur Betätigung der Spannkörper 13, 14, 113 linear beweglich aufgenommen ist (Pfeil 25) . Der Betätigungskörper 24, 124 ist durch einen Linearantrieb 26 linear antreibbar, so dass er in Richtung des Pfeiles 25 axial hin und her beweglich ist. An seinem von dem Linearantrieb 26 entfernten Endbereich hat der Betätigungskörper 24 Schrägflächen als Betätigungsflächen 27 zur Betätigung der Spannkörper 13 oder 14. Beispielsweise läuft der Betätigungskörper 24 an seinem freien Endbereich konisch aus. Wenn der Betätigungskörper 24 in der Zeichnung nach rechts, d.h. zu den Spannkörper 13 und 14 hin betätigt wird, drücken die Betätigungsflächen 27 die Spannkörper 13, 14 nach radial außen, was durch Pfeile 28 angedeutet ist.

An den Halteabschnitten 20, 120 ist beispielsweise ein Abschnitt 42 zur Aufnahme des Antriebs für den Betätigungskörper 24 vorgesehen. In dem Abschnitt 42 befindet sich beispielsweise eine Kammer, in welcher der Linearantrieb 26 aufgenommen ist.

Die Spannkörper 13 und 14 sind in Spannkörperführungen 29 radial am Spannkörperträger 11, 12 beweglich gelagert. Die Spannkörperführungen 29 kommunizieren mit dem Führungskanal 23. Beispielsweise drückt der Betätigungskörper 24 auf dem der Betätigungskörper 24 zugewandte Rückseiten 30 der Spannkörper 13, 14, so dass diese in den Spannkörperführungen 29, beispielsweise kanalartigen Spannkörperführungen, nach radial außen gedrückt werden. Somit kommen stirnseitige Spannflächen 31 der Spannkörper 13, 14 in Anlage mit der Innenumfangsfläche 87 der Lageröffnung 82 oder der Innenumfangsfläche 97 der Lageröffnung 92 der Lagerhülse 90.

Die Spannkörper 13 und 14 wirken nach radial außen gegen die Innenumfangsflächen 87 und 97 im Sinne eines Spannens, d.h. die Spanndorne 18 und 19 wirken von radial innen auf die Lageröffnungen 82 und 92 und verspannen dadurch das Motorbauteil 80, beispielsweise für eine weitere Bearbeitung.

Weiterhin ist es vorteilhaft, wenn die Spannvorrichtungen 10, 110 als Kalibriervorrichtungen dienen, das heißt dass die Spanndorne 18, 19 und 118 als Kalibrierdorne dienen, um die jeweiligen Lageröffnungen 82 und 92 zu kalibrieren.

Die Spanndorne 18, 19 und 118 können auch als Zentrierdorne dienen.

An einer Außenumfangsfläche 32 des Betätigungskörpers 24, die am Innenumfang des Führungskanals 23 entlang gleitverschieblich gelagert ist, erstreckt sich ein Schmiermittelkanal 33, beispielsweise schraubenlinienförmig. Der Schmiermittelkanal 33 kommuniziert mit einem Zufuhrkanal 34 am Halteabschnitt 20. Durch den Zufuhrkanal 34 kann also ein Schmiermittel in den Führungskanal 23, genauer den Schmiermittelkanal 33, eingebracht werden, das für einen leichten Lauf bzw. eine verbesserte Gleitverschieblichkeit des Betätigungskörpers 24 sorgt.

Eine zeichnerisch nicht detailliert dargestellte Variante der Erfindung sieht vor, dass der Schmiermittelkanal 33 beispielsweise im Bereich der Spannkörperführungen 29 und/oder der Spannflächen 31 ausmündet. Beispielsweise sind die Spannkörper 13, 14 von Kanalabschnitten durchsetzt, die mit dem Schmiermittelkanal 33 kommunizieren. Auf diese Weise kann im Bereich der Spannflächen 31 ein Schmiermittel oder Kühlmittel ausgebracht werden, was beispielsweise im Zusammenhang mit dem später beschriebenen Prägen der Innenumfangsflächen 87 und 97 einen Vorteil darstellen kann.

An der Außenumfangsfläche 32 des Betätigungskörpers 24 ist ferner eine Führungsnut 35 vorgesehen, in die ein Führungsvorsprung 36 eingreift. Der Führungsvorsprung 36 wird beispielsweise von einem Bolzen gebildet, dessen freies Ende nach radial innen in den Führungskanal 23 vorsteht und in die Führungsnut 35 eingreift. Der Führungsvorsprung 36 wirkt mit der Führungsnut 35 zum einen als Verdrehsicherung zusammen, d.h. dass sich der Betätigungskörper 24, der beispielsweise in der Art eines Schiebers ausgestaltet ist, im Führungskanal 23 nicht verdreht. Weiterhin schlägt der Führungsvorsprung 36 an den jeweiligen Längsendbereichen der Führungsnut 35 an, wenn der Betätigungskörper 24 linear verstellt wird (Pfeil 25). Somit dient diese Anordnung auch als Längsanschlag bzw. Linearanschlag.

Der Führungskanal 23 erstreckt sich vom Halteabschnitt 20 des Spannkörperträgers 11, 12 durch den Vorsprung 21 hindurch. Frontseitig, das heißt am freien Ende des Vorsprungs 21 ist beispielsweise eine Öffnung des Führungskanals 23 vorhanden, die durch einen Deckel 37 verschlossen sein kann. Die stirnseitige Öffnung kann auch offen bleiben. Es muss keine stirnseitige Öffnung des Führungskanals 23 vorhanden sein. Der Führungskanal 23 kann stirnseitig auch geschlossen sein.

Der Linearantrieb 26 und der Betätigungskörper 24, 124 bilden Bestandteile eines Spannantriebs 38, 138. Beispielsweise umfasst der Linearantrieb 26 einen pneumatischen Antrieb, zum Beispiel einen pneumatischen Zylinder, einen elektrischen Antrieb oder einen hydraulischen Antrieb.

Die Betätigungsflächen 27 sind beispielsweise an der Führungsnuten 39 vorgesehen, die am freien Ende des Betätigungskörpers 24 angeordnet sind. Die Führungsnuten 39 umfassen beispielsweise Schwalbenschwanzführungen 40, mit denen entsprechende Schwalbenschwanzkonturen 41 an den Rückseiten 30 der Spannkörper 13, 14 in Eingriff sind. Dadurch ist sichergestellt, dass nicht nur bei einer Verstellung des Betätigungskörpers 24 in Richtung einer Spannstellung, in der die Spannfläche 31 an den Innenumfangsflächen 87 und 97 mit einer Spannkraft anliegen, sondern auch in Richtung einer Lösestellung (entsprechend einer Betätigung des Betätigungskörpers 24 in der Zeichnung nach links), in der die Spannflächen 31 von den Innenumfangsflächen 87 und 97 weg bewegt sind, um die Spanndorne 18 und 19 in die Lageröffnungen 82 und 92 einzuführen oder daraus heraus zu bewegen.

An denen stirnseitigen Spannflächen 31 der Spannkörper 13, 14 befinden sich Prägekonturen 50. Die Prägekonturen 50 umfassen beispielsweise vorstehende Vorsprünge 51, die beispielsweise eine Art Lochstruktur oder ballige Struktur in die Innenumfangsflächen 87 und 97 einprägen, wenn die Spannkörper 13 und 14 ihre jeweilige Spannstellung einnehmen, also das Motorbauteil 80 spannen.

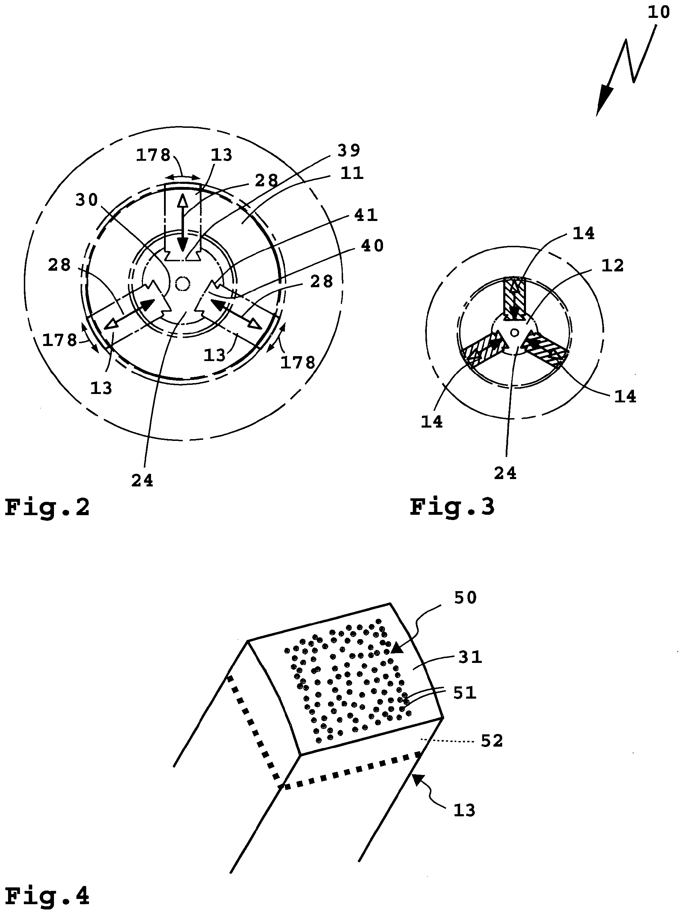

Die Prägekonturen 50 können direkt an den Stirnseiten der beispielsweise in der Art von Spannbacken ausgestalteten Spannkörper 13 und 14 angeordnet sein. Es ist aber auch möglich, dass an den Spannkörper 13 und 14 jeweils frontseitig Prägekörper 52 angeordnet sind (in Figur 4 angedeutet), die lösbar an den Spannkörper 13 und/oder 14 befestigbar sind. Somit können die Prägekörper 52 bei Verschleiß oder wenn andere Prägestrukturen in den Innenumfangsflächen 87 und 97 gewünscht sind, ausgetauscht werden. Die Prägekörper 52 sind beispielsweise plattenartig. Die Prägekörper 52 sind beispielsweise anhand einer Rastverbindung, Steckverbindung, Klebeverbindung, Schraubverbindung oder dergleichen mit dem jeweiligen sie tragenden Spannkörper 13 oder 14 verbunden.

Der Spanndorn 19 erfüllt noch eine Zusatzfunktion. Er bildet einen Einpressdorn 43 für die Lagerhülse 90. An dem Spanndorn 19 kann zweckmäßigerweise eine Stützanschlagfläche 44 für eine Stirnseite der Lagerhülse 90 vorgesehen sein. Beispielsweise befindet sich die Stützanschlagfläche 44 an einem Stützflansch 45 des Spanndorns 19. An der Stützanschlagfläche 44 kann beispielsweise eine Stirnseite der Lagerhülse 90 anliegen, so dass diese in die Lageraufnahme 83 mit noch etwas Spiel zu derselben eingeführt werden kann und dann durch radiale Spannen-Beaufschlagung durch den Einpressdorn 43 an den Innenumfang der Lageraufnahme 83 eingepresst wird. Dabei prägen die Prägekonturen 50 gleichzeitig eine Prägestruktur an die Innenumfangsfläche 97 der Lagerhülse 90. Die Prägestruktur eignet sich beispielsweise dazu, dass beim Betrieb des Motorbauteils 80 Öl oder ein sonstiges Schmiermittel z.B. in Taschen oder sonstigen Vertiefungen der Prägestruktur, festgehalten wird.

Die durch die Prägekonturen 50 in die Lageröffnung 82 ein geprägte Prägestruktur kann dieselbe Funktion haben. Es ist aber auch denkbar, dass beispielsweise die Lageraufnahme 83 für die Lagerhülse 90 zunächst durch den Spanndorn 19 mit einer Verdrehsicherung versehen wird, beispielsweise einer entsprechenden Prägestruktur, und anschließend die Lagerhülse 90 eingesetzt wird, welche dann ihrerseits wiederum eine Prägestruktur erhält, wenn sie vom Einpressdorn 43 in die Lageraufnahme 83 eingepresst wird. Es versteht sich, dass der Einpressdorn 43 und ein zuvor in die Lageraufnahme 83 Prägestrukturen einpressender Spanndorn voneinander unterschiedlich sein können, d.h. dass die Spannvorrichtung 10 für die Lageraufnahme 83 und die Lageröffnung 92 unterschiedliche Spanndorne oder Einpressdorne aufweist, die in Eingriff mit der Lageraufnahme 83 oder der Lageröffnung 92 gebracht werden können.

Der Einpressdorn 43 kann durch einen Stützkörper 46 während des Einpressens der Lagerhülse 90 abgestützt sein.

Die Prägekonturen 50 sind beispielsweise an den in vorbestimmten Winkelpositionen vorgesehenen Spannkörpern 13 vorgesehen. Mithin wird also beispielsweise in einem Winkelabstand von jeweils etwa 60° das Motorbauteil 80 an der Lageröffnung 82 mit Prägestrukturen versehen. Mit anderen Worten wird also nicht der gesamte Innenumfang der Lageröffnung 82 durch die Prägekonturen 50 bearbeitet, sondern es werden bestimmte Winkelbereiche geprägt.

Eine beispielhaft angedeutete Fördereinrichtung 175, zum Beispiel ein Handlingroboter oder dergleichen, setzt das Motorbauteil 80, also das Pleuel 81, in der geeigneten Winkelposition auf die beiden Spanndorne 18 und 19 auf, so dass die Prägekonturen in der jeweils drehwinkelrichtigen Position auf das Motorbauteil 80 einwirken. Beispielsweise bringen die Spannkörper 13 nur an vorbestimmten Winkelsegmenten 178 Prägungen in das Motorbauteil 80 ein.

An dieser Stelle sei bemerkt, dass der eine Spanndorn 18 für den anderen Spanndorn 19 (und umgekehrt) sozusagen zugleich ein Führungsmittel oder Positioniermittel darstellt derart, dass er für die geeignete Winkellage der durch die Prägekonturen 50 eingebrachten Einprägungen sorgt. Sowohl die Fördereinrichtung 175 als auch die beiden Spanndorne 18 und 19, die für eine geeignete Position des Motorbauteils 80 am jeweils anderen Spanndorn 18 oder 19 sorgen, bilden Positioniermittel 176.

Wenn die Fördereinrichtung 175 das Motorbauteil 80 beispielsweise in Bezug auf eine Längsrichtung 177 weiter oder weniger weit auf die Spanndorne 18, 19 aufsetzt, können die Prägekonturen 50 beispielsweise auch nur einen Teil (bezogen auf die Längsrichtung 177) der Lageröffnung 82 oder der Lageraufnahme 83 mit Prägungen versehen.

Der Spannkörper 113 umfasst eine Spannhülse 160. Die Spannhülse 160 umfasst lamellenartige Hülsensegmente 161, die voneinander getrennt sind, nämlich durch Dehnungsschlitze 164. Allerdings sind die Hülsensegmente 161 an einem Verbindungsabschnitt 162 miteinander verbunden. Der Verbindungsabschnitt 162 ist beispielsweise ringförmig und weist eine Eintrittsöffnung 163 für den Betätigungskörper 124 auf. Der Spannkörperträger 111 weist beispielsweise in der Zeichnung nicht sichtbare Haltemittel für die Spannhülse 160 auf. Beispielsweise ist der ringförmige Verbindungsabschnitt 162 an dem Spannkörperträger 111 lösbar befestigbar, zum Beispiel einschraubbar, ansteckbar oder dergleichen.

Die Spannhülse 160 ist durch den Betätigungskörper 124 betätigbar. Der Betätigungskörper 124 kann durch die Eintrittsöffnung 163 in die Spannhülse 160 eindringen. Der Betätigungskörper 124 weist an seinem freien Endbereich schräge Betätigungsflächen 127 auf, die an korrespondierenden Betätigungsflächen 165 entlanggleiten und bei einer Verstellung des Betätigungskörpers 124 in eine Spannstellung (in der Zeichnung nach rechts) eine durch Pfeile 28 angedeutete radiale Verstellung der Hülsensegmente 161 bewirkt. Die Betätigungsflächen165 befinden sich an einem mit der Eintrittsöffnung 163 kommunizieren den Kanal 166 der Spannhülse 160.

Es wäre zwar denkbar, dass direkt an den Hülsensegmenten 161 Spannflächen vorgesehen sind, die direkt auf beispielsweise die Innenumfangsfläche 87 der Lageröffnung 82 einwirken. Beispielsweise könnten an den entsprechenden Beaufschlagungsflächen 167, d.h. am Außenumfang der Spannhülse 160 entsprechende Prägekonturen vorgesehen sein, die direkt Prägestrukturen in die Innenumfangsfläche 87 prägen.

Die Beaufschlagungsflächen 167, im Prinzip also Spannflächen, sind beispielsweise an den freien Endbereichen der Hülsensegmente 161 radial außen an der Spannhülse 160 angeordnet. Allerdings wirken die Beaufschlagungsflächen 167 nicht direkt auf die Lageröffnung 82, sondern über den Prägekörper 152, der lösbar an der Spannhülse 160 und somit den Spannkörper 113 befestigbar ist.

Der Prägekörper 152 umfasst eine Prägehülse 153, die mehrere durch einen Verbindungsabschnitt 154 miteinander verbundene Hülsensegmente 155 aufweist. Die Hülsensegmente 155 weisen Prägeabschnitte 156 auf. An den Prägeabschnitten 156 sind Prägekonturen 150, beispielsweise Prägevorsprünge 51 oder dergleichen, angeordnet. Die Prägeabschnitte 156 sind an freien Endbereichen der Hülsensegmente 155 vorgesehen. Zwischen den Prägeabschnitten 156 und dem Verbindungsabschnitt 154 verlaufen Abschnitte 157. Die Abschnitte 157 sind über ihren gesamten Außenumfang gesehen konisch, so dass die Prägehülse 153 gut in die zu bearbeitende bzw. zu spannende Lageröffnung, zum Beispiel die Lageröffnung 82 oder 92 einzuführen ist.

Während die Prägeabschnitte 156 insgesamt einen zylindrischen Außenumfang definieren, bilden die Verbindungsabschnitte 154 einen Konus.

Die Prägeabschnitte 156 liegen mit ihren Innenseiten auf den Beaufschlagungsflächen 167 auf. Wenn der Betätigungskörper 124 in die Spannstellung verstellt wird, drückt er also die Beaufschlagungsflächen 167 nach radial außen und die darauf aufliegenden Prägeabschnitte 156 ebenfalls. Somit werden die Prägekonturen 150 in den Innenumfang der Lageröffnung 82 oder 92 eingeprägt.

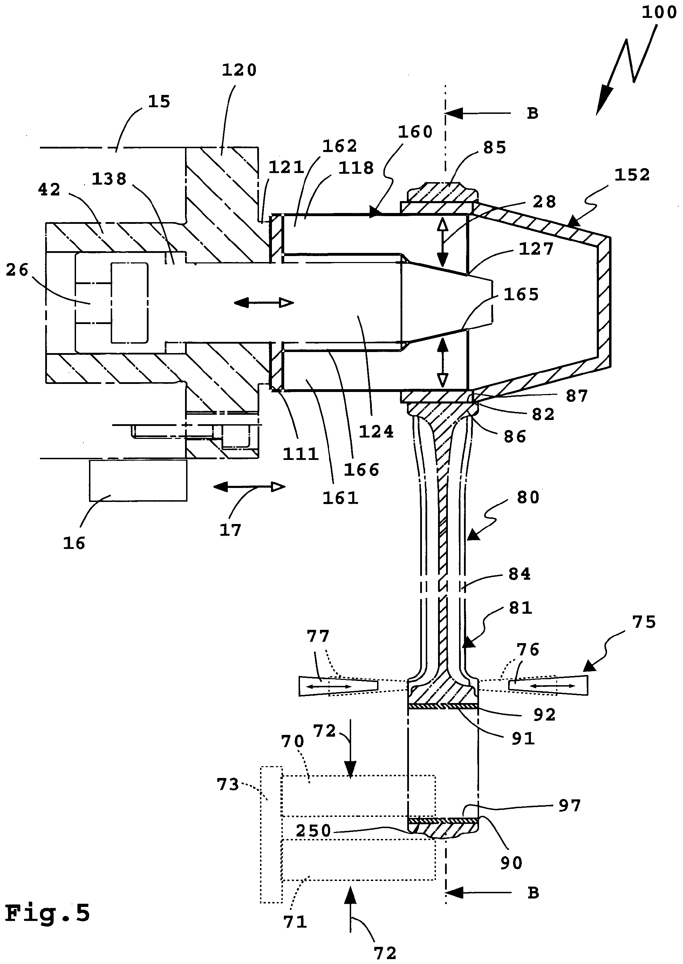

In Figur 5 ist noch ein Spannenprinzip mit einer Spannzange dargestellt, die beispielsweise ein Zangenelement 70 und ein Zangenelement 71 aufweist, die in Richtung von Pfeilen 72 aufeinander zu in eine Spannstellung bringbar sind. Das eine Zangenelement 70 weist an seiner der Innenumfangsfläche 97 zugewandten Seite beispielsweise eine Prägekontur 250 auf, mit der eine entsprechende Prägestruktur in die Innenumfangsfläche 97 einbringbar ist. Durch einen Antrieb 73 sind die Zangenelemente 70 und 71 aufeinander zu bzw. voneinander weg beaufschlagbar oder antreibbar.

Die Spannvorrichtungen 10, 100 bilden zweckmäßigerweise Zentriervorrichtungen. Es ist möglich, dass eine erfindungsgemäße Spannvorrichtung beispielsweise einen Prägekörper, z.B. 52 oder 152 nur von Fall zu Fall im Sinne z.B. eines Werkzeugwechsels aufnimmt, d.h. dass die Spannvorrichtung beispielsweise das Motorbauteil auch ohne das Einbringen einer Prägestruktur zu spannen oder zu halten. Weiterhin können erfindungsgemäße Anordnungen auch mit sozusagen konventionellen Spannvorrichtungen oder Haltevorrichtungen zusammenwirken.

Das ist im Ausführungsbeispiel gemäß Figur 5 dargestellt. Beispielsweise zentriert die Spannvorrichtung 100 das Motorbauteil 80 für einen weiteren Bearbeitungsschritt, bei dem beispielsweise die Lageröffnung 92 bearbeitet wird, zum Beispiel mit einer Prägestruktur versehen wird, was dann die zangenartig arbeitende Spannvorrichtung 75 ausführt. Die weitere Bearbeitung kann auch eine spanende oder schleifende Bearbeitung des Motorbauteils 80 oder beispielsweise auch ein Einpressen der Lagerhülse 90 in die Lageraufnahme 83 des Pleuels 81 umfassen.

Die Spannvorrichtung 100 wirkt als Zentriervorrichtung und zentriert das Motorbauteil 80, das dann seinerseits wiederum von einer Spannvorrichtung 75, die man auch als Haltevorrichtung bezeichnen könnte, für einen weiteren Bearbeitungsschritt gehalten wird. Die Spannvorrichtung 75 hat beispielsweise 2 relativ zueinander bewegliche Spannkörper 76, 77. Es ist möglich, dass beide Spannkörper 76 und 77 beweglich sind oder einer der Spannkörper 76 oder 77 ortsfest ist, d.h. dass
- die Spannvorrichtung 100 oder Zentriervorrichtung das Motorbauteil 80 zunächst zentriert,
- vorzugsweise an einem der beiden Spannkörper 76, 77 ablegt und
- dann die Spannvorrichtung 75 das Motorbauteil 80 spannend oder zumindest hält, beispielsweise indem der Spannkörper 77 oder 76 zum ortsfesten Spannkörper 76 oder 77 hin bewegt wird, um das Motorbauteil 80 zu spannen, nämlich für einen oder mehrere weitere Bearbeitungsschritte, zum Beispiel Prägen, Bohren oder dergleichen.

## Patentansprüche

1. Anordnung umfassend ein eine Lageröffnung (82, 92) aufweisendes Motorbauteil (80) und eine Spannvorrichtung zum Spannen des Motorbauteils (80), wobei die Spannvorrichtung (10; 110) zum Halten des Motorbauteils (80) mindestens einen Spannkörper (13, 14; 113), insbesondere einen Spannbacken und/oder einen Spanndorn (18, 19, 118), und einen Spannantrieb (38; 138) zum Verstellen einer Spannfläche (31; 131) des mindestens einen Spannkörpers (13, 14; 113) zur Anlage an einer Innenumfangsfläche (87, 97) der Lageröffnung (82, 92) in eine Spannstellung aufweist,
**dadurch gekennzeichnet, dass** das Motorbauteil (80) ein Pleuel (81) ist und die Spannvorrichtung einen Bestandteil einer Werkzeugmaschine oder eines Bearbeitungszentrums für Pleuel (81) bildet, wobei die Werkzeugmaschine oder das Bearbeitungszentrum eine Bearbeitungseinrichtung für mindestens einen weiteren Bearbeitungsschritt aufweist, wobei an der Spannfläche (31; 131) mindestens eine vor die Spannfläche (31; 131) vorstehende Prägekontur (50; 150) angeordnet ist, die bei einem Verstellen des mindestens einen Spannkörpers (13, 14; 113) in die Spannstellung eine Prägestruktur in die Lageröffnung (82, 92) einprägt.

2. Anordnung nach Anspruch 1, **dadurch gekennzeichnet, dass** der mindestens eine Spannkörper (13, 14; 113) an der Spannfläche (31; 131) mindestens einen Dehnungsschlitz (157) aufweist und/oder mindestens zwei durch mindestens einen Dehnungsschlitz (157) voneinander getrennte Wandabschnitte aufweist.

3. Anordnung nach Anspruch 1 oder 2, **dadurch gekennzeichnet, dass** an einem Spannkörperträger (11;, 12 111) der Spannvorrichtung (10; 110) mindestens zwei durch den Spannantrieb (38; 138) antreibbare Spannkörper (13, 14; 113) beweglich gelagert sind, von denen mindestens einer eine Spannfläche (31; 131) mit mindestens einer vor die Spannfläche (31; 131) vorstehenden Prägekontur (50; 150) aufweist und/oder dass sie eine Zentriervorrichtung zum Zentrieren des Motorbauteils (80) bildet.

4. Anordnung nach einem der vorhergehenden Ansprüche, **dadurch gekennzeichnet, dass** die Spannvorrichtung (10; 110) Positioniermittel (176) zur winkelrichtigen und/oder in einer Längsrichtung (177) richtigen Positionierung des Motorbauteils (80) und des mindestens einen Spannkörpers (13, 14; 113) relativ zueinander aufweist und/oder dass die mindestens eine Prägekontur (50; 150) an einem vorbestimmten Winkelsegment (178) des mindestens einen Spannkörpers (13, 14; 113) vorgesehen ist.

5. Anordnung nach einem der vorhergehenden Ansprüche, **dadurch gekennzeichnet, dass** die Spannvorrichtung (10; 110) eine Zange (70, 71) mit zwei relativ zueinander beweglichen und durch den Spannantrieb (38; 138) betätigbaren Zangenelementen (70, 71) aufweist, wobei eines der Zangenelemente (70) den zum Eingriff in die Lageröffnung (82, 92) vorgesehenen mindestens einen Spannkörper (13, 14; 113) mit der der Lageröffnung (82, 92) zugeordneten Spannfläche (31; 131) aufweist oder bildet und das andere Zangenelement (71) zur Anlage an einer die Lageröffnung (82, 92) begrenzenden Wand vorgesehen ist.

6. Anordnung nach einem der vorhergehenden Ansprüche, **dadurch gekennzeichnet, dass** die Spannvorrichtung (10; 110) einen insbesondere als Zentrierdorn ausgestalteten Spanndorn (18, 19, 118) aufweist und die Spannfläche (31; 131) an einer Außenumfangsfläche des Spanndorns (18, 19, 118) vorgesehen ist, die durch den Spannantrieb (38; 138) im Sinne eines Vergrößerns des Außenumfangs des Spanndorns (18, 19, 118) betätigbar ist, wobei der mindestens eine Spannkörper (13, 14; 113) des Spanndorns (18, 19, 118) zweckmäßigerweise mindestens zwei voneinander weg spreizbare, miteinander verbundene Spannsegmente (161) aufweist, die durch den Spannantrieb (38; 138) in die Spannstellung verstellbar sind, und/oder wobei vorteilhaft der Spanndorn (18, 19, 118) mindestens einen nach radial außen verstellbaren Spannkörper (13, 14) aufweist.

7. Anordnung nach einem der vorhergehenden Ansprüche, **dadurch gekennzeichnet, dass** die mindestens eine Prägekontur (50; 150) an einem lösbar an dem mindestens einen Spannkörper (13, 14; 113) anordenbaren Prägekörper (52; 152) angeordnet ist.

8. Anordnung nach Anspruch 7, **dadurch gekennzeichnet, dass** der Prägekörper (52; 152) ein Stempelelement oder eine Platte umfasst, das oder die an dem mindestens einen, insbesondere einen Spannbacken bildenden, Spannkörper (13, 14; 113) lösbar befestigbar ist, und/oder dass der Prägekörper (52; 152) eine Hülse (153) umfasst oder als eine Hülse (153) ausgestaltet ist, deren Außenumfang mindestens eine Spannfläche (31; 131) umfasst, wobei die Hülse (153) vorteilhaft mindestens zwei voneinander weg spreizbare, miteinander verbundene Hülsensegmente (155) aufweist, die durch den Spannantrieb (38; 138) in die Spannstellung verstellbar sind.

9. Anordnung nach einem der vorhergehenden Ansprüche, **dadurch gekennzeichnet, dass** der mindestens eine Spannkörper (13, 14; 113) und/oder der lösbar an dem mindestens einen Spannkörper (13, 14; 113) anordenbare Prägekörper (52; 152), insbesondere die Hülse (160, 153), mindestens einen radial aufweitbaren Wandabschnitt aufweist und/oder die mindestens eine Prägekontur (50; 150) ein beweglich, insbesondere drehbar, an der Spannfläche (31; 131) gelagertes Prägeelement, insbesondere eine Walze oder Kugel, umfasst und/oder dass die mindestens eine Prägekontur (50; 150) mindestens einen bezüglich der Spannfläche (31; 131) ortsfesten Prägevorsprung umfasst.

10. Anordnung nach einem der vorhergehenden Ansprüche, **dadurch gekennzeichnet, dass** der Spannantrieb (38; 138) ein Schrägflächengetriebe und/oder ein Keilflächengetriebe und/oder einen Fluidantrieb, insbesondere einen hydraulischen Antrieb, zum Verstellen des Spannkörpers (13, 14; 113), insbesondere des Spanndorns (18, 19, 118), in die Spannstellung und/oder mindestens eine hinter einem die mindestens eine Prägekontur (50; 150) aufweisenden Wandabschnitt des Spannkörpers (13, 14; 113), insbesondere des Spanndorns (18, 19, 118), angeordnete Fluidkammer aufweist, die bei einer Druckbeaufschlagung mit einem Fluid, insbesondere mit Hydrauliköl, den mindestens einen Wandabschnitt Richtung der Spannstellung betätigt.

11. Anordnung nach einem der vorhergehenden Ansprüche, **dadurch gekennzeichnet, dass** die Lageröffnung (82, 92) an einer in eine Lageraufnahme (83) eines Motorbauteil-Grundkörpers (88) des Motorbauteils (80) einzubringende Lagerhülse (90) vorgesehen ist und der mindestens eine Spannkörper (13, 14; 113) einen Bestandteil eines Einpressdorns (43) für die Lagerhülse (90) ist, wobei mindestens ein einen Teil der Spannfläche (31; 131) aufweisender Wandabschnitt des Einpressdorns (43) durch den Spannantrieb (38; 138) im Sinne eines Aufweitens eines Außenumfangs der Spannfläche (31; 131) und somit eines Außenumfangs der Lagerhülse (90) beaufschlagbar ist, um die in die Lageraufnahme (83) eingebrachte Lagerhülse (90) auf zuweiten und an eine Innenfläche der Lageraufnahme (83) des Motorbauteil-Grundkörpers (88) anzupressen.

12. Anordnung nach einem der vorhergehenden Ansprüche, **dadurch gekennzeichnet, dass** die Spannvorrichtung (10; 110) mindestens eine Stützanschlagfläche (44) für eine Stirnseite des Motorbauteils (80), insbesondere der Lagerhülse (90), aufweist.

13. Anordnung nach einem der vorhergehenden Ansprüche, **dadurch gekennzeichnet, dass** die Spannvorrichtung (10; 110) eine Werkstückhalterung zum Halten des Motorbauteils (80) aufweist und/oder dass sie einen Stützkörper (46) zum Abstützen des mindestens einen Spannkörpers (13, 14; 113) oder eines den mindestens einen Spannkörper (13, 14; 113) lagernden Spannkörperträgers (11;, 12 111) während des Einpressens der mindestens einen Prägekontur (50; 150) aufweist.

14. Anordnung nach einem der vorhergehenden Ansprüche, **dadurch gekennzeichnet, dass** die Werkzeugmaschine oder das Bearbeitungszentrum eine Kerbeinrichtung zum Einbringen einer Laserkerbe in das Motorbauteil (80) und/oder einer Crackeinrichtung zum Cracken eines Teils des Motorbauteils (80) aufweist.

15. Verfahren zum Spannen eines eine Lageröffnung (82, 92) aufweisenden Motorbauteils (80) in Gestalt eines Pleuels (81), mit einer Spannvorrichtung (10; 110) zum Halten des Pleuels (81), die mindestens einen Spannkörper (13, 14; 113), insbesondere einen Spannbacken und/oder einen Spanndorn (18, 19, 118) aufweist,
**dadurch gekennzeichnet, dass** das Verfahren folgende Schritte aufweist:
- Verstellen einer Spannfläche (31; 131) des mindestens einen Spannkörpers (13, 14; 113) zur Anlage an einer Innenumfangsfläche (87, 97) der Lageröffnung (82, 92) in eine Spannstellung durch einen Spannantrieb (38; 138), und
- Einprägen einer Prägestruktur in die Lageröffnung (82, 92) bei dem Verstellen des mindestens einen Spannkörpers (13, 14; 113) in die Spannstellung anhand mindestens einer vor die Spannfläche (31; 131) vorstehenden Prägekontur (50; 150).

## Claims

1. Assembly comprising an engine component (80) with a bearing orifice (82, 92) and a clamping device for clamping the engine component (80), wherein the clamping device (10; 110) has for holding the engine component (80) at least one clamping body (13, 14; 113), in particular a clamping jaw and/or a clamping mandrel (18, 19; 118) and a clamping drive (38; 138) for adjusting a clamping surface (31; 131) of the clamping body or bodies (13, 14; 113) for contact in a clamping position at the inner peripheral surface (87, 97) of the bearing orifice (82, 92),
**characterised in that** the engine component (80) is a connecting rod (81) and the clamping device forms part of a machine tool or a machining centre for connecting rods (81), wherein the machine tool of the machining centre has a machining device for at least one further machining step, wherein there is provided on the clamping surface (31; 131) at least one embossed contour (50; 150) in front of the clamping surface (31; 131) which, on adjustment of the clamping body or bodies (13, 14; 113) into the clamping position, impresses an embossed structure in the bearing orifice (82, 92).

2. Assembly according to claim 1, **characterised in that** the clamping body or bodies (13, 14; 113) has or have on the clamping surface (31; 131) at least one expansion slot (157) and/or at least two wall sections separated from one another by at least one expansion slot (157).

3. Assembly according to claim 1 or 2, **characterised in that** on one clamping body support (11, 12; 111) of the clamping device (10; 110) at least two clamping bodies (13, 14; 113), drivable by the clamping drive (38; 138) are movably mounted, with at least one body having a clamping surface (31; 131) with at least one embossed contour (50; 150) protruding from the clamping surface (31; 131) and/or forming a centring device for centring the engine component (80).

4. Assembly according to any of the preceding claims, **characterised in that** the clamping device (10; 110) has positioning means (176) for positioning, at the correct angle and/or correct in an axial direction (177), of the engine component (80) and the clamping body or bodies (13, 14; 113) relative to one another, and/or that the embossed contour or contours (50; 150) is or are provided on a predetermined angular segment (178) of the clamping body or bodies (13, 14; 113).

5. Assembly according to any of the preceding claims, **characterised in that** the clamping device (10; 110) has a pair of pliers (70, 71) with two pliers elements (70, 71) movable relative to one another and operable by means of the clamping drive (38; 138), wherein one of the pliers elements (70) has or forms the clamping body or bodies (13, 14; 113) provided for engagement in the bearing orifice (82, 92) with the clamping surface (31; 131) assigned to the bearing orifice (82, 92), and the other pliers element (71) is provided for contact with a wall bounding the bearing orifice (82, 92).

6. Assembly according to any of the preceding claims, **characterised in that** the clamping device (10; 110) has a clamping mandrel (18, 19; 118) in particular in the form of a centring mandrel and the clamping surface (31; 131) is provided on an outer peripheral surface of the clamping mandrel (18, 19; 118) which may be actuated by the clamping drive (38; 138) for the purpose of enlarging the outer periphery of the clamping mandrel (18, 19; 118), wherein the clamping body or bodies (13, 14; 113) of the clamping mandrel (18, 19; 118) expediently has or have at least two clamping segments (161), joined together and able to be spread apart from one another, which may be moved by the clamping drive (38; 138) into the clamping position, and/or wherein advantageously the clamping mandrel (18, 19; 118) has at least one clamping body (13, 14) which may be adjusted radially outwards.

7. Assembly according to any of the preceding claims, **characterised in that** the embossed contour or contours (50; 150) is or are provided on an embossed body (52; 152) located on the clamping body or bodies (13, 14; 113).

8. Assembly according to claim 7, **characterised in that** the embossed body (52; 152) includes a stamp element or a plate which may be attached releasably to the clamping body or bodies (13, 14; 113), in particular forming a clamping jaw, and/or that the embossed body (52; 152) includes a sleeve (153), the outer periphery of which includes at least one clamping surface (31; 131), wherein the sleeve (153) advantageously has at least two sleeve segments (155), joined together and able to be spread apart from one another, which may be moved by the clamping drive (38; 138) into the clamping position.

9. Assembly according to any of the preceding claims, **characterised in that** the clamping body or bodies (13, 14; 113) and/or the embossed body (52; 152), in particular the sleeve (160, 153), which may be releasably arranged on the clamping body or bodies (13, 14; 113), has or have a radially expandable wall section, and/or the embossed contour or contours (50; 150) include an embossing element, in particular a roller or a ball, mounted movably, in particular rotatably, on the clamping surface (31; 131), and/or that the embossed contour or contours (50; 150) include at least one embossing projection which is fixed relative to the clamping surface (31; 131).

10. Assembly according to any of the preceding claims, **characterised in that** the clamping drive (38; 138) has an inclined surface gear mechanism and/or a wedge surface gear mechanism and/or a fluid drive, in particular an hydraulic drive, for moving the clamping body (13, 14; 113), in particular the clamping mandrel (18, 19; 118), into the clamping position and/or at least one fluid chamber arranged behind a wall section of the clamping bodies (13, 14; 113), in particular the clamping mandrel (18, 19; 118), which has the embossed contour (50; 150) and which, under application of pressure by a fluid, in particular hydraulic oil, actuates the wall section or sections into the clamping position.

11. Assembly according to any of the preceding claims, **characterised in that** the bearing orifice (82, 92) is provided on a bearing sleeve (90) to be introduced into a bearing location (83) of an engine component base body (88) of the engine component (80), and the clamping body or bodies (13, 14; 113) is or are a part of a press-in mandrel (43) for the bearing sleeve (90), wherein at least one wall section of the press-in mandrel (43) which has a part of the clamping surface (31; 131) may be pressurised by the clamping drive (38; 138) for the purpose of enlarging an outer periphery of the clamping surface (31; 131) and thus an outer periphery of the bearing sleeve (90), in order to expand the bearing sleeve (90) introduced into the bearing location (83) and to adapt to an inner surface of the bearing location (83) of the engine component base body (88).

12. Assembly according to any of the preceding claims, **characterised in that** the clamping device (10; 110) has at least one support stop face (44) for an end face of the engine component (80), in particular the bearing sleeve (90).

13. Assembly according to any of the preceding claims, **characterised in that** the clamping device (10; 110) has a workpiece holder for holding the engine component (80), and/or that it has a support body (46) for supporting the clamping body or bodies (13, 14; 113) or a clamping body support (11, 12; 111) which supports the clamping body or bodies (13, 14; 113) during pressing-in of the embossed contour or contours (50; 150).

14. Assembly according to any of the preceding claims, **characterised in that** the machine tool or the machining centre has a notching device for making a laser notch in the engine component (80) and/or a cracking device for cracking a part of the engine component (80).

15. Method of clamping an engine component (80) in the form of a connecting rod (81), which has a bearing orifice (82, 92), with a clamping device (10; 110) for holding the connecting rod (81) and which has at least one clamping body (13, 14; 113), in particular a clamping jaw and/or a clamping mandrel (18, 19; 118),
**characterised in that** the method has the following steps:
- moving a clamping surface (31; 131) of the clamping body or bodies (13, 14; 113) for contact at an inner peripheral surface (87, 97) of the bearing orifice (82, 92) into a clamping position by means of a clamping drive (38; 138), and
- impressing an embossed structure in the bearing orifice (82, 92) by movement of the clamping body or bodies (13, 14; 113) into the clamping position with the aid of at least one embossed contour (50; 150) protruding from the clamping surface (31; 131).

## Revendications

1. Ensemble comprenant un composant de moteur (80) présentant un orifice de palier (82, 92) et un dispositif de serrage servant à serrer le composant de moteur (80), dans lequel le dispositif de serrage (10; 110) servant à maintenir le composant de moteur (80) présente au moins un corps de serrage (13, 14; 113), en particulier une mâchoire de serrage et/ou un mandrin de serrage (18, 19, 118), et un entraînement de serrage (38 ; 138) servant à ajuster une surface de serrage (31 ; 131) de l'au moins un corps de serrage (13, 14; 113) destiné à venir en appui au niveau d'une surface périphérique intérieure (87, 97) de l'orifice de palier (82, 92) dans une position de serrage,
**caractérisé en ce que** le composant de moteur (80) est une bielle (81) et le dispositif de serrage fait partie intégrante d'une machine-outil ou d'un centre d'usinage pour bielles (81), dans lequel la machine-outil ou le centre d'usinage présente un système d'usinage pour au moins une autre étape d'usinage, dans lequel est disposé au niveau de la surface de serrage (31 ; 131) au moins un contour d'estampage (50 ; 150) faisant saillie de la surface de serrage (31 ; 131), qui estampe lors d'un ajustement de l'au moins un corps de serrage (13, 14 ; 113) dans la position de serrage une structure d'estampage dans l'orifice de palier (82, 92).

2. Ensemble selon la revendication 1, **caractérisé en ce que** l'au moins un corps de serrage (13, 14 ; 113) présente au niveau de la surface de serrage (31 ; 131) au moins une fente de dilatation (157) et/ou présente au moins deux sections de paroi séparées l'une de l'autre par au moins une fente de dilatation (157).

3. Ensemble selon la revendication 1 ou 2, **caractérisé en ce que** sont montés de manière mobile au niveau d'un support de corps de serrage (11, 12 ; 111) du dispositif de serrage (10 ; 110) au moins deux corps de serrage (13, 14 ; 113) pouvant être entraînés par l'entraînement de serrage (38 ; 138), dont au moins un présente une surface de serrage (31 ; 131) avec au moins un contour d'estampage (50 ; 150) faisant saillie de la surface de serrage (31 ; 131), et/ou qu'il forme un dispositif de centrage servant à centrer le composant de moteur (80).

4. Ensemble selon l'une quelconque des revendications précédentes, **caractérisé en ce que** le dispositif de serrage (10 ; 110) présente des moyens de positionnement (176) servant à positionner correctement de manière angulaire et/ou correctement dans une direction longitudinale (177) le composant de moteur (80) et l'au moins un corps de serrage (13, 14 ; 113) l'un par rapport à l'autre, et/ou que l'au moins un contour d'estampage (50 ; 150) est prévu au niveau d'un segment angulaire (178) prédéfini de l'au moins un corps de serrage (13, 14 ; 113).

5. Ensemble selon l'une quelconque des revendications précédentes, **caractérisé en ce que** le dispositif de serrage (10 ; 110) présente une pince (70, 71) avec deux éléments de pince (70, 71) mobiles l'un par rapport à l'autre et pouvant être actionnés par l'entraînement de serrage (38 ; 138), dans lequel un des éléments de pince (70) présente ou forme l'au moins un corps de serrage (13, 14 ; 113) prévu pour venir en prise avec l'orifice de palier (82, 92), avec la surface de serrage (31 ; 131) associée à l'orifice de palier (82, 92) et l'autre élément de pince (71) est prévu pour venir en appui au niveau d'une paroi délimitant l'orifice de palier (82, 92).

6. Ensemble selon l'une quelconque des revendications précédentes, **caractérisé en ce que** le dispositif de serrage (10 ; 110) présente un mandrin de serrage (18, 19, 118) configuré en particulier en tant que mandrin de centrage et la surface de serrage (31 ; 131) est prévue au niveau d'une surface périphérique extérieure du mandrin de serrage (18, 19, 118), qui peut être actionnée par l'entraînement de serrage (38; 138) au sens d'un agrandissement de la périphérie extérieure du mandrin de serrage (18, 19, 118), dans lequel l'au moins un corps de serrage (13, 14 ; 113) du mandrin de serrage (18, 19, 118) présente de manière opportune au moins deux segments de serrage (161) pouvant être écartés de manière à s'éloigner l'un de l'autre, reliés l'un à l'autre, qui peuvent être ajustés par l'entraînement de serrage (38 ; 138) dans la position de serrage et/ou dans lequel de manière avantageuse le mandrin de serrage (18, 19, 118) présente au moins un corps de serrage (13, 14) pouvant être ajusté vers l'extérieur radialement.

7. Ensemble selon l'une quelconque des revendications précédentes, **caractérisé en ce que** l'au moins un contour d'estampage (50; 150) est disposé au niveau d'un corps d'estampage (52 ; 152) pouvant être disposé de manière amovible au niveau de l'au moins un corps de serrage (13, 14 ; 113).

8. Ensemble selon la revendication 7,
**caractérisé en ce que** le corps d'estampage (52; 152) comprend un élément formant poinçon ou une plaque, qui peut être fixé de manière amovible au niveau de l'au moins un corps de serrage (13, 14; 113) formant en particulier une mâchoire de serrage, et/ou que le corps d'estampage (52 ; 152) comprend une douille (153) ou est configuré en tant qu'une douille (153), dont la périphérie extérieure comprend au moins une surface de serrage (31 ; 131), dans lequel la douille (153) présente de manière avantageuse au moins deux segments de douille (155) pouvant être écartés de manière à s'éloigner l'un de l'autre, reliés l'un à l'autre, qui peuvent être ajustés par l'entraînement de serrage (38 ; 138) dans la position de serrage.

9. Ensemble selon l'une quelconque des revendications précédentes, **caractérisé en ce que** l'au moins un corps de serrage (13, 14 ; 113) et/ou le corps d'estampage (52 ; 152) pouvant être disposé de manière amovible au niveau de l'au moins un corps de serrage (13, 14 ; 113), en particulier la douille (160, 153), présente au moins une section de paroi pouvant être élargie de manière radiale, et/ou l'au moins un contour d'estampage (50 ; 150) comprend un élément d'estampage monté de manière mobile, en particulier de manière à pouvoir tourner, au niveau de la surface de serrage (31 ; 131), en particulier un cylindre ou une sphère, et/ou que l'au moins un contour d'estampage (50 ; 150) comprend au moins une saillie d'estampage stationnaire par rapport à la surface de serrage (31 ; 131).

10. Ensemble selon l'une quelconque des revendications précédentes, **caractérisé en ce que** l'entraînement de serrage (38; 138) présente un mécanisme à surfaces inclinées et/ou un mécanisme à surfaces de calage et/ou un entraînement fluidique, en particulier un entraînement hydraulique, servant à ajuster le corps de serrage (13, 14 ; 113), en particulier le mandrin de serrage (18, 19, 118), dans la position de serrage et/ou au moins une chambre à fluide disposée derrière une section de paroi, présentant l'au moins un contour d'estampage (50; 150), du corps de serrage (13, 14; 113), en particulier du mandrin de serrage (18, 19, 118), qui actionne lors d'une action exercée par une pression avec un fluide, en particulier avec une huile hydraulique, l'au moins une section de paroi en direction de la position de serrage.

11. Ensemble selon l'une quelconque des revendications précédentes, **caractérisé en ce que** l'orifice de palier (82, 92) est prévu au niveau d'une douille de palier (90) à introduire dans un logement de palier (83) d'un corps de base de composant de moteur (88) du composant de moteur (80) et l'au moins un corps de serrage (13, 14 ; 113) fait partie intégrante d'un mandrin d'insertion par pression (43) pour la douille de palier (90), dans lequel au moins une section de paroi, présentant une partie de la surface de serrage (31 ; 131), du mandrin d'insertion par pression (43) peut être soumise à l'action de l'entraînement de serrage (38; 138) au sens d'un élargissement d'une périphérie extérieure de la surface de serrage (31; 131) et ainsi d'une périphérie extérieure de la douille de palier (90) pour élargir la douille de palier (90) introduite dans le logement de palier (83) et pour la presser au niveau d'une surface intérieure du logement de palier (83) du corps de base de composant de moteur (88).

12. Ensemble selon l'une quelconque des revendications précédentes, **caractérisé en ce que** le dispositif de serrage (10 ; 110) présente au moins une surface de butée d'appui (44) pour un côté frontal du composant de moteur (80), en particulier de la douille de palier (90).

13. Ensemble selon l'une quelconque des revendications précédentes, **caractérisé en ce que** le dispositif de serrage (10 ; 110) présente une fixation de pièce servant à maintenir le composant de moteur (80), et/ou qu'il présente un corps d'appui (46) servant à soutenir l'au moins un corps de serrage (13, 14 ; 113) ou un support de corps de serrage (11, 12 ; 111) portant l'au moins un corps de serrage (13, 14; 113) pendant l'insertion par pression de l'au moins un contour d'estampage (50 ; 150).

14. Ensemble selon l'une quelconque des revendications précédentes, **caractérisé en ce que** la machine-outil ou le centre d'usinage présente un système à entailler servant à pratiquer une entaille au laser dans le composant de moteur (80) et/ou un système de craquage servant à craquer une partie du composant de moteur (80).

15. Procédé servant à serrer un composant de moteur (80), présentant un orifice de palier (82, 92), sous la forme d'une bielle (81), avec un dispositif de serrage (10 ; 110) servant à maintenir la bielle (81), qui présente au moins un corps de serrage (13, 14 ; 113), en particulier une mâchoire de serrage et/ou un mandrin de serrage (18, 19, 118),
**caractérisé en ce que** le procédé présente les étapes suivantes :
- ajustement d'une surface de serrage (31 ; 131) de l'au moins un corps de serrage (13, 14 ; 113) destiné à venir en appui au niveau d'une surface périphérique intérieure (87, 97) de l'orifice de palier (82, 92) dans une position de serrage par un entraînement de serrage (38 ; 138), et
- estampage d'une structure d'estampage dans l'orifice de palier (82, 92) lors de l'ajustement de l'au moins un corps de serrage (13, 14 ; 113) dans la position de serrage à l'aide d'au moins un contour d'estampage (50; 150) faisant saillie devant la surface de serrage (31 ; 131).
